# EUROPEAN PATENT SPECIFICATION

(11) **EP 0 597 929 B1**
(45) Date of publication and mention of the grant of the patent: **12.03.1997**
(21) Application number: 92916386.3
(22) Date of filing: 29.07.1992
(51) Int. Cl.: C03B 7/086, C03B 7/092

(54) **FEEDERS FOR MOLTEN GLASS**
SCHRAUBFOERMIGER GLASAUSSTOSSKOLBEN
DISTRIBUTEURS DE VERRE EN FUSION

(30) Priority: 29.07.1991 GB 9116355
(43) Date of publication of application: 25.05.1994
(73) Proprietor: BH-F(ENGINEERING) LIMITED, Womborne, Wolverhampton WV5 8BY (GB)
(72) Inventor: AUERBECK, Jiri, 501 92 Hradeckrálové (CS); STANLEY, George, Michael, Dunstable Bedfordshire LU5 4HY (GB)
(74) Representative: Gallafent, Richard John
(86) International application number: GB9201402
(87) International publication number: WO9302976

(56) References cited:
- DE-A- 3 620 082
- DE-B- 1 069 345
- DE-U- 8 503 883

## Description

This invention relates to feeders for molten glass.

In continuous manufacture of glass articles, molten glass needs to be withdrawn in successive portions from a large body of glass. Each portion, called a gob, is then worked into the appropriate glass article.

In order to produce articles of consistent quality, it is customary to manufacture successive articles from a large uniform bulk of molten glass and to extract successive gobs therefrom via a system of a feeder and an orifice in the base of the feeder through which the glass passes and at which gobs are formed.

Molten glass in a form ready for manufacturing glass articles is highly viscous and generally needs to be positively urged through the orifice set in the base of the feeder in order to form a gob, though given time, since the orifice is simply left open, large gobs of glass will form. The size of such a gob is limited by the fact that as the gob gets heavier, it will neck and detach from the glass above. Conventionally, shears are provided below the orifice to avoid the formation of a long string of molten glass and to cut the stream into discrete gobs.

In the manufacture of glass articles at relatively high production speeds, for example in glass container manufacture using independent section machines, gob takeoff rates are substantial, and it is customary to form gobs using a plunger system located within the feeder and chop them to size with appropriate shears immediately below the orifice in the floor of the feeder. The plunger ascends for the next stroke and during that ascent there is little or no viscous glass flowing through the orifice.

For slower operations, for example where only occasional feed of glass is required to form a gob, the orifice may be associated with positive closure means to stop a gob forming when not wanted.

DE-A-32 16 067 discloses an alternative approach to gob formation from a feeder where the plunger has on its surface a helical thread and is mounted not merely for vertical reciprocation but also for rotation about its axis. The flow of glass in a generally vertical cylindrical feeder may be accelerated downwardly towards the dispensing orifice by rotating the plunger in one sense, or flow may be retarded by rotating the plunger in the opposite sense. The plunger may be moved up and down as well as being rotated, and the presence of the helical thread on the outside of the plunger enhances the vertical pulling or pushing of the body of molten glass as the plunger is moved up and down.

DE-A-36 20 082 describes in detail a similar arrangement.

By careful control of such screw feed/plunger units, considerable control may be exercised over the rate at which gobs form and can be dispensed from the dispensing orifice. However, the range of possible dispensing speeds is relatively limited. The major thrust for dispensing tends to derive from the plunger action rather than the screw pumping action.

DE-B-10 69 345 discloses a different alternative approach to gob formation from a feeder where a stirrer is configured to substantially correspond with a conically shaped dispensing basin. The gap between the stirrer and the dispensing basin determines the rate of flow of molten glass past the plunger, and rotation of the stirrer aids the maintenance of homogeneity of the molten glass. The flow of the molten glass is induced by gravity.

According to the present invention a glass feeder for dispensing gobs of molten glass on demand comprises a basin for the molten glass, a frustoconical region in said basin having a gob-dispensing orifice in a base of said region, a helical screw feeder positioned above and aligned with the orifice, and means for rotating the screw feeder in either sense, wherein the frustoconical region in said basin is capable of substantially accommodating the vertical axial length of the screw feeder, characterised in that the screw feeder has an external size and shape which is complementarily matched to an internal size and shape of the frustoconical region of the basin, to provide a hollow conical inwardly tapering passage between said screw feeder and said frustoconical region so that when the screw feeder is rotated in one sense, molten glass is fed from the basin through said hollow conical inwardly tapering passage substantially axially from an upper end of the helical screw feeder remote from the gob-dispensing orifice to a point adjacent the orifice, and when the screw feeder is rotated in the other sense, such rotation is capable of substantially preventing movement of the molten glass through the orifice and/or capable of substantially retracting any molten glass protruding from the orifice.

By virtue of this arrangement, the pumping action of the helical screw can be adjusted (by adjusting the vertical height of the screw relative to the bowl) as desired. Very high gob extrusion rates can be achieved, as well as very low ones.

The helical screw can be made of a variety of materials, for example of an appropriate metal or of refractory material such as ceramic, or a combination of such materials. The height of the helical thread, i.e. its projection from the shaft or base on which it is set, may vary. The shaft or base may itself be cylindrical or frustoconical. The thread shape may be, in crosssection, oblong, square, trapezoid, or rounded. The distance of the crest of the thread from the inner wall of the basin may be constant or may be adjustable. The thread may be a single-throw thread or a multiple throw or multiple start thread.

The invention is illustrated by way of example with reference to the accompanying drawings in which:
- Figure 1: shows a vertical section through the end of a feeder constructed in accordance with the present invention;
- Figure 2: shows an alternative construction of feeder of the present invention;
- Figure 3: shows a further alternative construction of feeder;
- Figure 4: shows a third alternative construction of feeder, and
- Figure 5: is a sectional view through another form of screw feeder of the present invention.

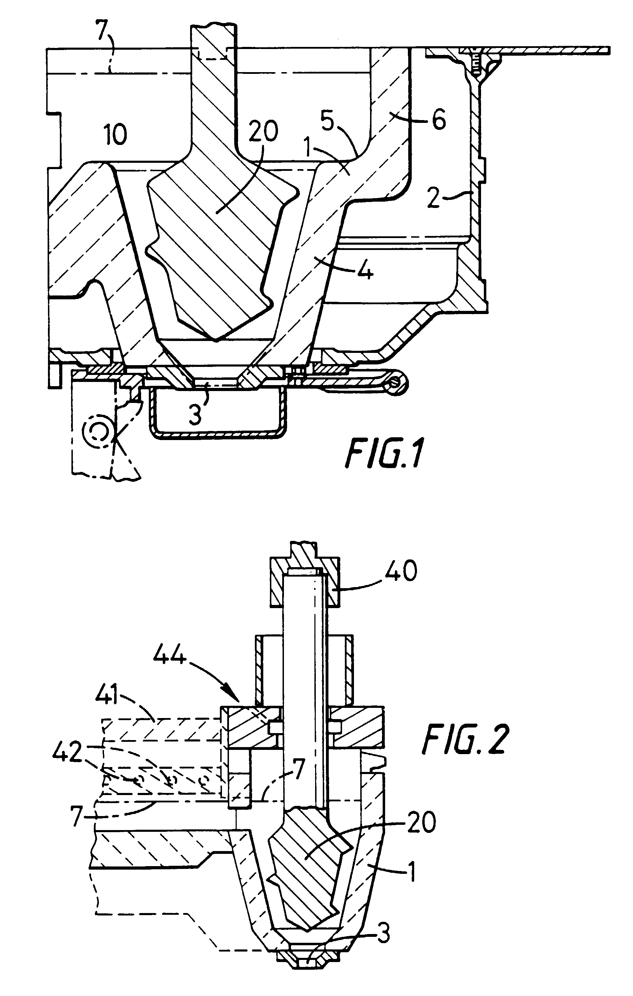

Figure 1 shows a pouring basin at the end of a glass feeder. The basin consists of a shaped monolithic refractory block 1 which is fitted at the outer end of a channel leading from a glass manufacturing furnace. The block is set in an external steel casing 2. The block consists of a conical basin having an orifice 3 at its base, a generally frustoconical sloping side wall 4 which merges via shoulder 5 with a vertical end wall to the feeder 6 which extends above the level of molten glass 7 in the feeder. At its other side, the basin is formed with a lip 10 which acts as a weir and which lies adjacent the in-feed channel.

Mounted for rotation about a vertical axis extending through orifice 3 is a frustoconical screw 20. Screw 20 has a helical thread on it extending a little more than 360° about the vertical axis, the ends of the thread being blended into the generally frustoconical surface of the lower end of the screw. The external diameter of the crest of the thread decreases as the thread moves towards the lower end of the member 20. The crest of the thread thus describes a conically narrowing helical path which is a substantially constant distance from the respective inner wall of the lower portion 4 of the pouring basin.

The screw 20 is mounted in a framework (not shown in Figure 1) above the pouring basin and is provided with an appropriate drive motor and gearing to enable it to be rotated in either sense. In addition, the entire framework may be raised or lowered with respect to the basin thus increasing or decreasing the clearance between the crest of the helical thread on screw 20 and the inner frustoconical wall of the basin.

By appropriately controlling the rotational speed, and adjusting the vertical position of the screw 20, a desired flow pattern of glass passing through the orifice 3 can be obtained.

At an appropriate point, a pair of shears mounted immediately below the orifice 3 may be operated to cut off the molten glass hanging from the orifice to form a gob of predictable weight and shape. Either before or after the operation of such shears, the movement of the screw 20 may be so controlled as to prevent any immediate further outflow of molten glass through the orifice 3 or even to retract protruding molten glass into that orifice.

In Figures 2 to 4, like reference numerals are used to denote like parts. In Figure 2 some of the structure above the feeder and feeder basin is shown diagrammatically. Screw 20 is shown depending from a plunger chuck 40 which can be rotated about a vertical axis as desired when it is desired to force molten glass through orifice 3. The vertical height of chuck 40 is adjustable (by means not shown) to vary the distance between the crest of the helical thread on member 20 and the inner conical wall of monolithic basin 1, and so vary the pumping action for a given rotational speed of member 20. The glass in the feeder and feeder basin is covered by a refractory roof 41 with sources of heat 42 in it and a wall and lid assembly 44.

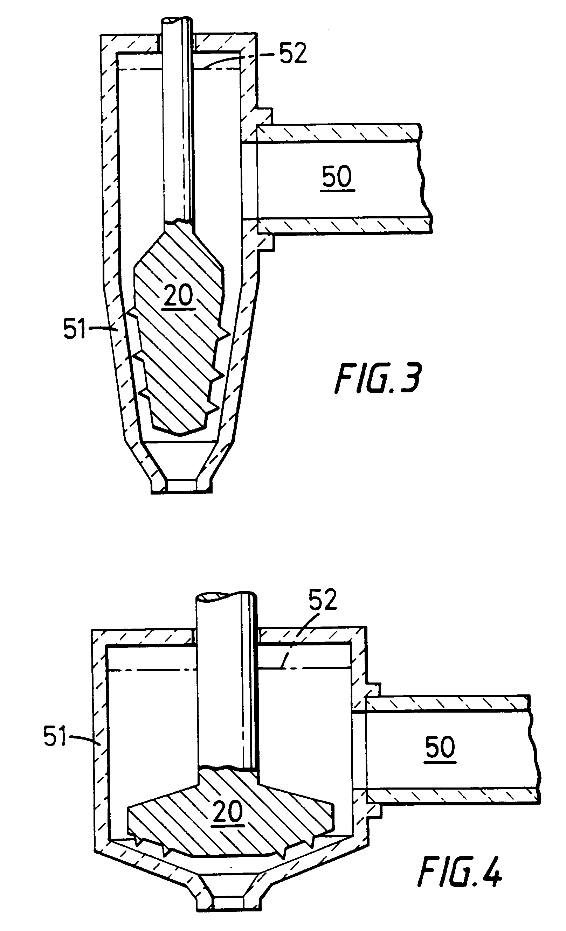

Figures 3 and 4 show very diagrammatically other possible constructions. In both cases, a feeder 50 takes the form of a completely enclosed refractory channel wholly full of molten glass and terminating in a basin 51 within which a helically-threaded tapered screw 20 may rotate about a vertical axis. The level of the glass surface in feeder 51 is indicated at 52. The construction shown in Figure 4 is particularly useful where the vertical height between the free glass surface in the feeder and the dispensing orifice is restricted.

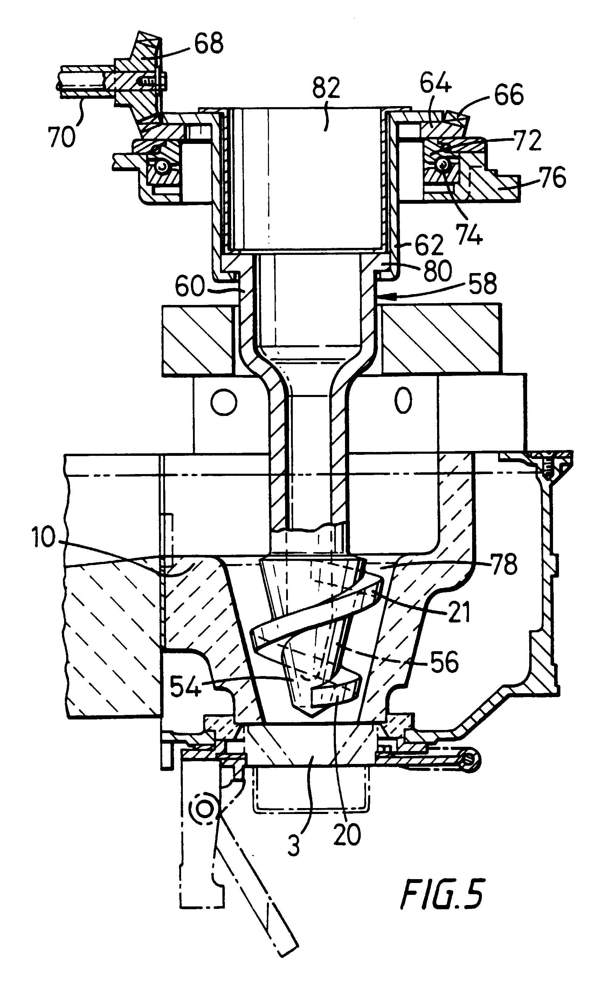

Figure 5 is similar to Figure 1, with the major difference being the way in which the screw 20 is rotated. The screw head 54 has a hollow core, so that the wall 56 of the head is of substantially-uniform radial thickness. The head 54 is fast with a tubular plunger 58 having a belled neck 60 intended to be gripped by a chuck assembly. The chuck assembly includes an outer flanged cylinder 62 and an inner cylinder 82, with the plunger 58 between them. The upper flange of cylinder 62 is set on to a rotary collar 64 having a peripheral bevelled gear-ring 66 meshing with a driving bevel gear-ring 68 coupled to a rotary drive shaft 70. The collar 64, and with it the weight of the chuck assembly and plunger 58 and feed screw 20 are carried by a rotary ring 72 having its weight transferred by a train of ball bearings 74 to an annular support 76. Not only is the feed screw 20 rotatable in either direction and over a range of speeds, but the head is reciprocable along its vertical rotary axis. The helical thread 21 on the screw head is sufficiently close to the radially-outer sloping walls of the frustoconical outlet passage 78 that rotation of the screw head in the appropriate sense is able to stop completely the vertical movement of molten glass through the outlet passage. As the screw head is raised to its upper limit position rotation of the feed screw in either direction has significantly less effect on the flow of glass, so that a desired weight of gob can be formed very accurately by selecting a specific rate of rotation of the feed screw in one sense and a selected height of the feed screw from its lowest position. The operator of the gob-forming apparatus may be provided with a table setting of the different weights of gobs obtainable with fixed speeds and fixed heights, so that the operator can choose the appropriate parameters once told what weight of gobs are needed. Insofar as the rotary speed and the height control affect the flow of fused glass from the discharge orifice 3, the actual weight of each gob is controlled by operating the associated shears positioned immediately below the orifice 3 at carefully-timed intervals.

Thus it will be seen that the present invention provides a method in which the weight of gobs issuing from the machine, and the rate at which they are produced, are under the control of the operator, leading to the production of an accurate gob feeder.

All of the constructions shown are capable of being effectively used for the slow dispensing of gobs of glass, e.g. for hand crafting or blowing, of any desired practical size.

## Claims

1. Apparatus for dispensing gobs of molten glass on demand comprising a basin for the molten glass (6), a frustoconical region (4) in said basin having a gob-dispensing orifice (3) in a base of said region, a helical screw feeder (20) positioned above and aligned with the orifice (3), and means for rotating the screw feeder (20) in either sense, wherein the frustoconical region (4) in said basin (6) is capable of substantially accommodating the vertical axial length of the screw feeder (20), characterised in that the screw feeder (20) has an external size and shape which is complementarily matched to an internal size and shape of the frustoconical region of the basin, to provide a hollow conical inwardly tapering passage between said screw feeder (20) and said frustoconical region (40) so that when the screw feeder is rotated in one sense, molten glass is fed from the basin through said hollow conical inwardly tapering passage substantially axially from an upper end of the helical screw feeder (20) remote from the gob-dispensing orifice (3) to a point adjacent the orifice, and when the screw feeder (20) is rotated in the other sense, such rotation is capable of substantially preventing movement of the molten glass through the orifice (3) and/or capable of substantially retracting any molten glass protruding from the orifice (3).

2. Dispensing apparatus as claimed in Claim 1, in which the external surface of the screw feeder (20) is substantially parallel to the tapering walls (4) of the basin (6).

3. Dispensing apparatus as claimed in Claim 1 or 2, in which the thread on the surface of the screw feeder (20) extends through more than 360° about its axis.

4. Dispensing apparatus as claimed in any preceding claim, in which the height of the crest of the threads from the adjacent surface of the screw feeder (20) varies along the length of the thread.

5. Dispensing apparatus as claimed in any preceding claim, in which the screw feeder (20) may be detachably engaged with means positioned above the level of the molten glass (7) in the basin (6) for both rotating the screw feeder (20) in either direction at an adjustable speed, and for raising and lowering it either step-wise or smoothly.

6. Dispensing apparatus as claimed in Claim 5, in which the screw feeder (20) is fast or integral with a solid shaft able to have its remote end engaged by a rotary chuck.

7. Dispensing apparatus as claimed in Claim 5, in which the screw feeder (20) is hollow and is fast or integral with a tubular shaft able to have its remote end engaged by a rotary clamp.

## Patentansprüche

1. Vorrichtung zum Abgeben von Tropfen aus geschmolzenem Glas bei Bedarf, aufweisend: Ein Gefäß für das geschmolzene Glas (6), einen kegelstumpfförmigen Bereich (4) in dem Gefäß mit einer tropfenabgebenden Austrittsöffnung (3) in einer Basis des genannten Bereichs, einen schraubenförmigen Schneckenzuführer (20), der oberhalb der Austrittsöffnung (3) angeordnet und mit der Austrittsöffnung (3) ausgerichtet ist, sowie eine Einrichtung zum Drehen des Schneckenzuführers (20) in beiden Richtungen, wobei der kegelstumpfförmige Bereich (4) in dem Gefäß (6) dazu befähigt ist, im wesentlichen die vertikale axiale Länge des Schneckenzuführers (20) aufzunehmen, **dadurch gekennzeichnet,** daß der Schneckenzuführer (20) eine äußere Abmessung und eine äußere Gestalt aufweist, welche in komplementärer Weise an eine innere Abmessung und eine innere Gestalt des kegelstumpfförmigen Bereichs des Gefäßes angepaßt sind, um eine hohle, konische, sich nach einwärts verjüngende Passage zwischen dem Schneckenzuführer (20) und dem kegelstumpfförmigen Bereich (4) zu ergeben, so daß, wenn der Schneckenzuführer in der einen Richtung gedreht wird, geschmolzenes Glas von dem Gefäß durch die hohle, konische, sich nach einwärts verjüngende Passage im wesentlichen axial von einem oberen Ende des schraubenförmigen Schneckenzuführers (20), entfernt von der tropfenabgebenden Austrittsöffnung (3), zu einer zu der Austrittsöffnung benachbarten Stelle gespeist wird und, wenn der Schneckenzuführer (20) in der anderen Richtung gedreht wird, eine solche Drehung dazu befähigt ist, eine Bewegung des geschmolzenen Glases durch die Austrittsöffnung (3) im wesentlichen zu verhindern, und/oder dazu befähigt ist, irgendwelches aus der Austrittsöffnung (3) austretendes, geschmolzenes Glas im wesentlichen rückzuführen.

2. Abgabevorrichtung, wie in Anspruch 1 beansprucht, bei welcher die Außenseite des Schneckenzuführers (20) zu den sich verjüngenden Wänden (4) des Gefäßes (6) im wesentlichen parallel ist.

3. Abgabevorrichtung, wie in Anspruch 1 oder 2 beansprucht, bei welcher das Gewinde an der Oberfläche des Schneckenzuführers (20) sich durch mehr als 360° um seine Achse erstreckt.

4. Abgabevorrichtung, wie in einem der vorhergehenden Ansprüche beansprucht, bei welcher die Höhe des Kopfes der Gewinde von der benachbarten Oberfläche des Schneckenzuführers (20) entlang der Länge des Gewindes variiert.

5. Abgabevorrichtung, wie in einem der vorhergehenden Ansprüche beansprucht, bei welcher mit dem Schneckenzuführer (20) eine Einrichtung in lösbarer Weise in Eingriff gelangen kann, die oberhalb des Niveaus des geschmolzenen Glases (7) in dem Gefäß (6) angeordnet ist, um sowohl den Schneckenzuführer (20) in jeder Richtung mit einer einstellbaren Geschwindigkeit zu drehen als auch diesen entweder schrittweise oder gleichmäßig anzuheben und abzusenken.

6. Abgabevorrichtung, wie in Anspruch 5 beansprucht, bei welcher der Schneckenzuführer (20) an einer Vollwelle befestigt oder mit dieser einstückig ist, wobei die Vollwelle dazu befähigt ist, daß mit ihrem entfernten Ende ein Drehfutter in Eingriff gelangt.

7. Abgabevorrichtung, wie in Anspruch 5 beansprucht, bei welcher der Schneckenzuführer (20) hohl ist und an einer Hohlwelle befestigt oder mit dieser einstückig ist, wobei die Hohlwelle dazu befähigt ist, daß mit ihrem entfernten Ende eine drehbare Klemmvorrichtung in Eingriff gelangt.

## Revendications

1. Appareil pour distribuer des paraisons de verre fondu à la demande, comprenant un bassin de verre fondu (6), une zone tronconique (4) dans ledit bassin comportant un orifice distributeur de paraisons (3) dans une base de ladite zone, un alimentateur à vis hélicoïdale (20) positionné au-dessus et aligné avec l'orifice (3), et des moyens pour faire tourner l'alimentateur à vis (20) dans un sens ou dans l'autre, dans lequel la zone tronconique (4) dudit bassin (6) est capable de loger sensiblement la longueur axiale verticale de l'alimentateur à vis (20), caractérisé en ce que l'alimentateur à vis (20) possède une dimension et une forme externes correspondant, de façon complémentaire, à une dimension et une forme internes de la zone tronconique du bassin, afin de réaliser un passage conique creux s'effilant vers l'intérieur entre ledit alimentateur à vis (20) et ladite zone tronconique (40), de sorte que lorsque l'alimentateur à vis tourne dans un sens, le verre fondu est alimenté du bassin à travers ledit passage conique creux s'effilant vers l'intérieur, de façon sensiblement axiale à partir d'une extrémité supérieure de l'alimentateur à vis hélicoïdale (20) éloigné de l'orifice distributeur de paraison (3), jusqu'à un point contigu à l'orifice, et que lorsque l'alimentateur à vis (20) tourne dans l'autre sens, cette rotation est en mesure d'empêcher sensiblement le déplacement du verre fondu à travers l'orifice (3) et/ou est en mesure de retirer sensiblement toute partie de verre fondu dépassant de l'orifice (3).

2. Appareil distributeur selon la revendication 1, dans lequel la surface externe de l'alimentateur à vis (20) est sensiblement parallèle aux parois s'effilant (4) du bassin (6).

3. Appareil distributeur selon la revendication 1 ou 2, dans lequel le filet sur la surface de l'alimentateur à vis (20) s'étend sur plus de 360° autour de son axe.

4. Appareil distributeur selon l'une quelconque des revendications précédentes, dans lequel la hauteur de la crête des filets à partir de la surface adjacente de l'alimentateur à vis (20) varie le long de la longueur du filet.

5. Appareil distributeur selon l'une quelconque des revendications précédentes, dans lequel l'alimentateur à vis (20) peut être engagé de façon amovible avec des moyens positionnés au-dessus du niveau de verre fondu (7) dans le bassin (6) pour, à la fois, faire tourner l'alimentateur à vis (20) dans une direction ou une autre à une vitesse réglable, et l'élever et l'abaisser, soit pas à pas, soit en continu.

6. Appareil distributeur selon la revendication 5, dans lequel l'alimentateur à vis (20) est fixe ou solidaire d'un arbre plein capable d'avoir son extrémité éloignée engagée par un mandrin tournant.

7. Appareil distributeur selon la revendication 5, dans lequel l'alimentateur à vis (20) est creux et est fixe ou solidaire d'un arbre tubulaire capable d'avoir son extrémité éloignée engagée par un collier de serrage tournant.
